# EUROPEAN PATENT APPLICATION

(11) **EP 3 909 436 A1**
(43) Date of publication of application: **17.11.2021**
(21) Application number: 20174392.9
(22) Date of filing: 13.05.2020
(51) Int. Cl.: A23K 20/28, A23K 50/75, A01K 31/18, A01K 39/00

(54) **ADDITIVE FOR PULLET STARTER FEED AND PULLET STARTER FEED MIXTURE, METHOD OF MANUFACTURING AND USE HEREOF FOR LIVESTOCK POULTRY BREEDING**

(71) Applicant: Track ApS, 6870 Ølgod (DK)
(72) Inventor: NIELSEN, Carsten, 8800 Viborg (DK); ANDERSEN, Karsten Egelund, 6870 Ølgod (DK)
(74) Representative: Patrade A/S

(57) **Abstract**

The disclosure relates to an additive for pullet starter feed and a pullet starter feed mixture comprising shining particles. The shining particles may be configured with reflective characteristic of reflecting incident light in one or more directions. The additive may be adapted for being dry-mixed with pullet starter feed. The shining particles may furthermore be adapted for maintaining the reflective characteristic in full or partly when dry-mixed with the pullet starter feed.

Further disclosed is uses of the additive in pullet starter feed and method of manufacturing the pullet starter feed mixture.

## Description

### Field of disclosure

The disclosure relates to an additive for pullet starter feed and a pullet starter feed mixture comprising shining particles. The shining particles may be configured with reflective characteristic of reflecting incident light in one or more directions. The additive may be adapted for being dry-mixed with pullet starter feed. The shining particles may furthermore be adapted for maintaining the reflective characteristic in full or partly when dry-mixed with the pullet starter feed.

Further disclosed is uses of the additive in pullet starter feed and method of manufacturing the pullet starter feed mixture.

### Background

Today, poultry livestock breeding includes feeding of freely moving poultry. An essential part of a successful breeding includes, that the pullets must eat a substantial amount of feed within twenty-four hours after hatching for reducing any health risks.

Furthermore, an early increase in the weight of the pullets typically also results in a more rapid growth of the pullets and hence a shorter breeding time for the pullets to reach a predetermined slaughter weight i.e. breeding time being the time from hatching to the time of reaching the predetermined slaughter weight.

Stimulating the feeding instinct of pullets is therefore of great importance in the first twenty-four hours.

US patent 2630096 discloses a poult feeder applying a green light source as a stimuli signal for stimulation of the feeding instinct immediately upon hatching and the development of healthy feeding habits during the early stages of growth.

A common and well-known appliance for attracting the chickens to the feeding area is Chick paper. Chick paper is configured for making a rustling noise when the pullets step on it. The rustling noise attracts the pullets and hence attracts the pullets to approach the feed.

Another critical point in time is, when the poult no longer feeds off the yolk. In particular for chickens, this is around day three from hatch, where the chicken no longer feeds off the yolk. At that point, the poult may again need additional stimuli for continued eating and preferably for continued increase in weight.

Solutions for stimulation the feeding instinct in pullets within the first twenty-four hours and again, when the pullets no longer feeds off the yolk, is of great interest for a healthy and rapid growth. Furthermore, increasing the weight of the poult with a few percentage in the first seven days can result in the pullets reaching the appropriate slaughter weight faster and hence a shorter production time from hatching to slaughtering.

### Objective of the disclosure

The objective of the disclosure is to achieve a solution for one or more of the above-mentioned challenges. The objective includes achieving a feed and/or a feed mixture for poultry, which attracts the pullets to the feeding area and in particular to the feed. A further objective may be to stimulate the pullets feeding instinct and/or pecking. There is also a desire to achieve a method of manufacturing the feed and use hereof in the breeding of poultry livestock.

### Description of the disclosure

Disclosed herein is an additive for pullet starter feed comprising shining particles. The shining particles may be configured with reflective characteristic of reflecting incident light in one or more directions. The additive may be adapted for being dry-mixed with pullet starter feed. The shining particles may furthermore be adapted for maintaining the reflective characteristic in full or partly when dry-mixed with the pullet starter feed.

In this disclosure pullets may refer to poults, broilers or similar expressions used for a young domestic chicken, turkey, pheasant, or other young fowls raised for food, rearing or breeding.

Breeding may in this disclosure be used as a general term covering rearing and keeping of livestock for food or other purposes.

The reflective characteristics of the shining particles may include sparkling, which may be defined as being reflective and shine brightly. A sparkling object may thus have a reflective surface, which reflects single or multiple incident wavelengths. A sparkling object may reflect light such that it appears as giving off tiny sparks. A sparkling object may be perceived as being clear and bright, and shining with multiple small points of light. Tinsel, mica, mother of pearl may all be perceived as being shining.

Alternatively, a sparkling object may, be perceived as to cause glitter or shine. Thus, the reflective characteristics of the shining particles may include glittering.

The shining particles may reflect light with multiple wavelengths or reflect light with wavelengths within one or more selected ranges of wavelengths.

The amount of light to be reflected may be in a range where a sufficient amount is reflected for the pullets between 10-100 % of the incoming light, 30-80% or 50-75%.

Pullet starter feed may be perceived as a general term in this disclosure and may include or be limited to nutrition, feed pellets, bugs, insects, medical substances, drugs or other compositions beneficial in poultry breeding. Pullet starter feed may be feed especially configured for newly hatched pullets, thus being the initial or start-up feed to be consumed within the first twenty-four hours of hatching and again, when the pullets no longer feeds off the yolk. Nutrition elements may refer to a dry object being one or more of nutrition, feed pellets, bugs, insects, medical substances, drugs or other compositions beneficial in poultry breeding.

One effect of the additive may be to evoke the pullets' attention to the additive or a feed into which it is mixed. The shining particles may reflect light such that the pullets' interest are evoked for approaching the additive or feed. The interest for shining objects is observed for other species of birds e.g. magpies, whom collects large shining objects.

Another effect may be to stimulate the pecking instinct of the pullets specifically by use of shining particles. This may be advantageous in the initial feeding phase of the pullets immediately after hatching for increasing or improving the pullets' pecking. The pullets may, in the same process become exposed to the feed if the additive is not directly combined with the feed e.g. if the sparkling additive do not adhere to the feed.

The effects may be considered as nudging the pullets to the feeding areas and the feed. This nudging effect may result in, that the pullets are taught where to find the feed; approaching the feeding area may become an entrenched habit.

These effects may lead to healthier and faster weight gaining pullets.

Furthermore, a change in relative position of a pullet and a shining particle with fixed light sources may cause a change in reflection perceived by the pullet. This effect may be beneficial for evoking the pullets' attention.

Another effect of the poultry feed may be that even in dim light the reflection from the shining particles may be perceived as being equally intensive to or more intensive than in full light and hence, may cause the pullets to continue eating for a longer time. A prolonged eating time may result in a faster weight gain of the pullets. An increase in weight of the poult with a few percentage within the first seven days and especially within the first 24-hours can result in the pullets reaching the appropriate slaughter weight faster and hence achieving a shorter production time from hatching to slaughtering.

Light and pullets' perception hereof is a widely discussed subject. The perceptions of which type of light, for how long and the intensity hereof is best suited for breeding of pullets varies between breeders. However, a general perception in poultry breeding is, that the pullets should preferably be exposed to dark periods with a minimum duration of six hours, that bright light may be used in cases where pecking damage and cannibalism do not pose a problem and that very dim lighting may adversely affect ocular development.

Yet a further effect of the poultry feed may arise in cases where pecking damage and cannibalism pose a problem. In this case, a dimmed lighting may be preferred. In this case, the reflection from the shining particles may be perceived as being equally intensive to, or more intensive than in full light and hence, may help to draw the pullets' attention to the feed and in this way, help the pullets to continue eating even in surrounding with dimmed lighting.

Furthermore, if the concern that very dim lighting may adversely affect ocular development by the pullets, the reflection from the shining particles may help to reduce that risk. This may be achieved because the variation in intensity between the reflected light from the poultry feed and the surroundings may help in the ocular development by the pullets.

This may lead to upholding the feeding activity by the pullets, even in cases, where the facilities may be exposed to only dimmed lighting.

Pullet starter feed when entering the feeding pans or feeding area may include coarse elements and elements of a floury characteristic. The floury elements may have a tendency to cake-up in the feeding pans. Such caking-up effect in the feeding pans may have a number of drawbacks.

If the feed cakes up in the feeding pans, the pullets may perceive the feeding pans to be empty even though they are partly filled. This may reduce the capacity of perceived accessible feed to the pullets. Furthermore, if the feeding pans are controlled by a weighing system for continuous feed, such a control system may operate falsely due to the residues in the feeding pans. Also, the caked up feed may be residues which are to be wasted, which may increase costs of the production.

In one aspect, the additive may comprise a content of the shining particles of 0.01% -100% by weight of the additive;
- thus, the additive may consist of only the shining particles;
- alternatively, the additive may comprise a content of shining particles being just enough for achieving a shining effect of the additive e.g. 0.01 - 1 % by weight of the total weight of additive;
- in another alternative, the shining particles may constitute an amount of 1%, 10%, 20%, 50% by weight of the total weight of the additive, amongst others.

The suitable content of the shining particles in the additive may be adapted to the race of pullets, the conditions of the facilities e.g. the lighting conditions, any possible dilution by mixture with other elements or other relevant conditions.

In yet another aspect, the shining particles may comprise food colouring, such as E171 (titanium dioxide) or other additives with comparable effects.

In one embodiment, the additive may be biodegradable. This may be beneficial if using the pullets' droppings as fertiliser or manure.

In one embodiment of the additive, the shining particles may have a spherical shape with a mean size between 0.25-3mm, preferably between 0.3-2.5mm.

In one embodiment of the additive, the shining particles may be configured as flakes with a mean size between 0.1-3mm, preferably between 0.1-1mm, even more preferably between 0.3-0.6mm

An initial test method has been established, and initial tests have been performed for comparing shining particles shining effect in feed. Different parameters for the shining particles have been changed and compared.

One finding was, that the weight may not be the key parameter for the distribution of the shining particles in an existing pullet feed. The finding instead suggests that parameters linked to the surface area having the shining effect is a key parameter. The size and shape of the particles may influence how evenly the shining particles are distributed in a feed, if they concentrate in the lower half of the feed in the feeding pan or in the upper half; the ability to reflect the light; the adhesion of the feed to the surface area.

Spherical shaped particles may for example have a higher weight than flakes but with the same surface area. Key parameters may include:
- Size
- Distribution of size
- Form
- Color
- Reflection type
- Surface adherence for feed
- Durability to Humidity
- Durability to mechanical wear from e.g. feed and process equipment in the pullet production
- Volume / weight.

Other findings includes that the total area and numbers of surfaces in the feed may play a key role, that the shape of particles and the size may be linked for achieving an optimal shining effect of the particles mixed in a feed, that the shape of the particles influences on how the particles are distributed in a coarse part of a feed and in a more floury part of a feed.

Shining particles having a spherical shape may include "oval" or egg shapes, round, elliptic and may include a surface comprising multiple faces combined into a spherical shape. Shining particles having a spherical shape with mean sizes in the range of 0.3-0.6 mm were also found to exhibit an excellent shining effect when mixed into the test feed.

Shining particles configured as flakes being flat type particles or '2D' particles may include circular shaped, square shaped, triangular, hexagonal or other regular or non-regular shapes. The shape of the flakes may be a result of a cut-out process or a resulting shape due to the processing of the flakes.

Typically, the average feed type pellets used in pullet production is 2.5 mm and thus the maximum mean size should preferable be in the same order.

The mean size of the shining particles is defined as the size of particles, which can pass through a grid with openings of that size.

In one aspect, the shining particles may be semi-transparent. In an alternative aspect, the shinning particles may be opaque.

In one embodiment of the additive, the shining particles may reflect light in the range of 315-750 nm.

In one embodiment of the additive, the shining particles may reflect light in the range of 450-510 nm, preferably in the range of 460-500, even more preferably in the range of 475-485 nm, in the range of 600-660 nm, preferably in the range of 610-650, even more preferably in the range of 625-635 nm or a combination hereof.

In one embodiment of the additive, the shining particles may reflect light in the range of 495-570 nm.

The optimal composition of light for breeding poultry may depend on the exact race being breed and the purpose of the breeding e.g. whether it is for faster weight increase, stimulation of egg production or another purpose.

The general perception in regard to chickens are, that they can see light with wavelengths in the range of 315-750 nm, and that chickens may see higher peaks at spectrums around 480 and 630 nm. Furthermore, it is by some perceived that green light is beneficial for attracting and stimulating chickens.

One further effect of the embodiments, wherein the reflected light comprises one or more of the visible wavelengths for chickens or other pullets may be to target the shining effect to the specific race being breed. This may as previously described evoke the pullets' attention to the poultry feed. In addition, the targeted wavelengths may stimulate the pecking instinct of the pullets.

Another effect of the embodiments with targeted wavelengths may be to reduce the amount or size of the shining particles, if the reflected wavelengths are within a range for which the pullets has particular sensitive receptors.

In one embodiment of the additive, the shining particles comprises fully or partly coated nutrition elements.

Nutrition elements may as previously described refer to a dry object being one or more of nutrition, feed pellets, bugs, insects, medical substances, drugs or other compositions beneficial in poultry breeding.

One further effect of this embodiment may be that in the pecking act, if the pullets are specifically interested in the shining particles, this may include pecking of the coated nutrition element and the pecking may thus result in eating. An additional effect connected hereto may be that selected nutrition elements may be coated for achieving an increased intake hereof by the pullets.

Further disclosed herein is a pullet starter feed mixture comprising a pullet starter feed and an additive comprising shining particles.

The additive may be according to any of the previously described embodiments in this disclosure of an additive comprising shining particle.

The effects and advantages of this embodiment may include those already described either individually or in combination for the additive i.e.:
- evoke the pullets' attention to the feed,
- stimulate the pecking instinct of the pullets specifically by use of shining particles,
- utilize the shining effect even under dimmed light conditions,
- prolong the eating time for the pullets for faster weight gain of the pullets, including different cases of lighting conditions,
- expose the pullets to varying intensity between the reflected light from the shining particles and the surroundings.

An additional effect of this embodiment may be that the additive is used in a general starter feed for pullets. This may be beneficial for targeting the feed for the pullets' behavior and may push to the pecking and feeding instincts of the pullets. E.g. the additive may be mixed into a general starter feed for the pullets and used for a short time e.g. within the first 24 hours and again for a limited period at the time where the pullets no longer feeds off the yolk. Hence, the additive may be mixed and adapted to the specific periods of the pullets' lives, where the feed instinct or pecking instinct beneficially can be pushed.

In another aspect, the additive may also be used in later periods of the pullets' lives e.g. around day 18-20, where it is often observed, that the pullets gradually losses instinct/initiative for eating

In one embodiment of the pullet starter feed mixture, the mean content of the shining particles may be below 0.5% by weight of the pullet starter feed mixture, preferably below 0.1% by weight of the pullet starter feed mixture and even more preferably below 0.01% by weight of the pullet starter feed mixture.

In one embodiment of the pullet starter feed mixture, the mean content of the shining particles may be at least 1 shining particle pr. 100 ml of pullet starter feed, preferably at least 10 shining particle pr. 100 ml of pullet starter feed, even more preferably at least 50 shining particle pr. 100 ml of pullet starter feed.

One further effect of these further embodiments may be to ensure that the shining effect is visible in cases where some of the shining particles are covered e.g. by non-sparkling feed and/or nutrition elements, while achieving to use a limited amount of shining particles, which may reduce any additional cost of using an additive.

Further disclosed herein is use of an additive, comprising shining particles in a pullet starter feed.

The additive may be according to any of the previously described embodiments in this disclosure of an additive comprising shining particle.

One effect of this use may be that a pullet starter feed mixture may be achieved having the effects and advantages already described either individually or in combination for the additive, for the pullet starter feed mixture or a combination hereof i.e.:
- achieve the pullet starter feed mixture with a general starter feed for the pullets,
- adapting the pullet starter feed mixture to specific periods of the pullets' lives, where the feed instinct or peck instinct beneficially can be pushed,
- evoke the pullets' attention to the feed,
- stimulate the pecking instinct of the pullets specifically by use of shining particles,
- utilize the shining effect even under dimmed light conditions,
- prolong the eating time for the pullets for faster weight gain of the pullets, including different cases of lighting conditions,
- expose the pullets to varying intensity between the reflected light from the shining particles and the surroundings.

In one embodiment of the use of the additive in a pullet starter feed, the content of the shining particles is below 0.5% by weight of the poultry starter feed and the additive, preferably below 0.1% by weight of the poultry starter feed and the additive, and even more preferably below 0.01% by weight of the poultry starter feed and the additive.

In one embodiment of the use of the additive in a pullet starter feed, the mean content of the shining particles is at least 1 shining particle per 100 ml of pullet starter feed, preferably at least 10 shining particle per 100 ml of pullet starter feed, even more preferably at least 50 shining particle per 100 ml of pullet starter feed.

The additive mixed with the poultry starter feed may be a pullet starter feed mixture according to any of the previously described embodiments of pullet starter feed mixtures in this disclosure.

One further effect of these further embodiments may be to ensure that the shining effect of the resulting pullet starter feed mixture is visible in cases where some of the shining particles are covered e.g. by non-sparkling feed and/or nutrition elements while using a limited amount of additive, which may reduce any additional cost of using an additive.

Further disclosed herein is a method of manufacturing an additive comprising an act of fully or partly coating nutrition elements with a composition adapted to solidify into a surface with reflective characteristic of reflecting incident light in one or more directions.

The additive may be according to any of the previously described embodiments of an additive comprising shining particles being fully or partly coated nutrition elements.

One effect of this method may be that a pullet starter feed mixture can be achieved having the effects and advantages already described either individually or in combination for an additive comprising shining particles being fully or partly coated nutrition elements i.e.
- that in the pecking act may directly result in eating, and
- that selected nutrition elements may be coated for achieving an increased intake hereof by the pullets.

Further disclosed herein is the use of an additive for medical treatment of poultry, said use is for a poultry feed.

In one aspect, the shining particles may include fully or partly coated medical substance.

As previously described, the feeding area, drinking area or both may include areas whit other sources of nutrition, medical substances, drugs or other compositions beneficial in poultry breeding. Furthermore, the pullet starter feed may be perceived as a general term in this disclosure and may include or be limited to nutrition, feed pellets, bugs, insects, medical substances, drugs or other compositions beneficial in initial poultry breeding. Nutrition elements may refer to a dry object being one or more of nutrition, feed pellets, bugs, insects, medical substances, drugs or other compositions beneficial in poultry breeding.

One effect of this embodiment may be that in the pecking act, if the pullets are specifically interested in the shining particles, this may include pecking of the coated medical substances; and thus, the pecking may result in the pullets consuming the medical substances. An additional effect connected hereto may be that selected nutrition elements may be coated for achieving increased intake hereof by the pullets.

Further disclosed herein is a method of manufacturing the pullet starter feed mixture comprising an act of mixing the additive into an existing pullet starter feed.

The pullet starter feed mixture may be according to any of the previously described embodiments.

One effect of this use may be that a pullet starter feed mixture may be achieved having the effects and advantages already described either individually or in combination for the additive or for the pullet starter feed mixture i.e.:
- evoke the pullets' attention to the feed,
- stimulate the pecking instinct of the pullets specifically by use of shining particles,
- utilize the shining effect even under dimmed light conditions,
- prolong the eating time for the pullets for faster weight gain of the pullets, including different cases of lighting conditions,
- expose the pullets to varying intensity between the reflected light from the shining particles and the surroundings,
- use the pullets droppings as fertiliser or manure.

## Claims

1. Additive for pullet starter feed comprising shining particles configured with reflective characteristic of reflecting incident light in one or more directions, said additive being adapted for being dry-mixed with pullet starter feed, and said shining particles being adapted for maintaining the reflective characteristic in full or partly when dry-mixed with the pullet starter feed.

2. Additive according to claim 1 being biodegradable.

3. Additive according to any one of the preceding claims wherein the shining particles has a spherical shape with a mean size between 0.25-3mm, preferably between 0.5-2.5mm.

4. Additive according to any one of the preceding claims wherein the shining particles is configured as flakes with a mean size between 0.1-3mm, preferably between 0.1-1mm, even more preferably between 0.3-0.6mm

5. Additive according to any one of the preceding claims, wherein the shining particles reflects light in the range of 315-750 nm, preferably in the range of 495-570 nm.

6. Additive according to any one of the preceding claims, wherein the shining particles reflects light in the range of 450-510 nm, preferably in the range of 460-500, even more preferably in the range of 475-485 nm, in the range of 600-660 nm, preferably in the range of 610-650, even more preferably in the range of 625-635 nm or a combination hereof.

7. Additive according to any one of the preceding claims wherein the shining particles comprises fully or partly coated nutrition elements.

8. Pullet starter feed mixture comprising a pullet starter feed and the additive according to any one of the preceding claims.

9. Pullet starter feed mixture according to claim 8, wherein the mean content of the shining particles is below 0.5% by weight of the pullet starter feed mixture , preferably below 0.1 % by weight of the pullet starter feed mixture, even more preferably below 0.01 % by weight of the pullet starter feed mixture.

10. Pullet starter feed mixture according to any one of claims 8-9, wherein the mean content of the shining particles is at least 1 shining particle pr. 100 ml of pullet starter feed, preferably at least 10 shining particle pr. 100 ml of pullet starter feed, even more preferably at least 50 shining particle pr. 100 ml of pullet starter feed.

11. Use of the additive according to any one of the claims 1-7 in a pullet starter feed.

12. The use according to claim 11 wherein the mean content of the shining particles is below 0.5% by weight of the pullet starter feed and the additive, preferably below 0.1 % by weight of the pullet starter feed and the additive, even more preferably below 0.01 % by weight of the pullet starter feed and the additive.

13. The use according to any one of claims 11-12, wherein the mean content of the shining particles is at least 1 shining particle pr. 100 ml of pullet starter feed and the additive, preferably at least 10 shining particle pr. 100 ml of pullet starter feed and the additive, even more preferably at least 50 shining particle pr. 100 ml of pullet starter feed and the additive.

14. A method of manufacturing the additive according to claim 7 comprising an act of fully or partly coating nutrition elements with a composition adapted to solidify into a surface with reflective characteristic of reflecting incident light in one or more directions.

15. A method of manufacturing the pullet starter feed mixture according to any one of the claims 8-10 comprising an act of mixing the additive into an existing pullet starter feed.
